# EUROPEAN PATENT SPECIFICATION

(11) **EP 3 368 239 B1**
(45) Date of publication and mention of the grant of the patent: **28.07.2021**
(21) Application number: 16860788.5
(22) Date of filing: 27.10.2016
(51) Int. Cl.: B23D 45/04, G01D 5/00

(54) **CHOP SAW WITH IMPROVED MOTOR CONTROLS**
KAPPSÄGE MIT VERBESSERTEN MOTORSTEUERUNGEN
SCIE CIRCULAIRE AVEC COMMANDES DE MOTEUR AMÉLIORÉES

(30) Priority: 27.10.2015 US 201562246648 P
(43) Date of publication of application: 05.09.2018
(73) Proprietor: Black & Decker Inc., New Britain, CT 06053 (US)
(72) Inventor: TOMAYKO, David C., Ellicott City, Maryland 21042 (US); ZHANG, Qiang, Lutherville, Maryland 21093 (US); SPENCER, William D., Ellicott City, Maryland 21042 (US); COX, John D., Lutherville, Maryland 21093 (US)
(74) Representative: SBD IPAdmin
(86) International application number: PCT/US2016/059124
(87) International publication number: WO 2017/075220

(56) References cited:
- WO-A1-2006/033381
- WO-A2-2008/022354
- US-A- 5 200 747
- US-A1- 2004 040 395
- US-A1- 2006 091 304
- US-A1- 2008 059 089
- US-A1- 2010 257 990
- US-A1- 2015 174 674
- US-A1- 2015 174 674
- US-B1- 6 997 091

## Description

### FIELD OF THE INVENTION

The present disclosure relates to chop saws, in particular, to a chop saw with an improved motor control, and more particularly to a chop saw according to the preamble of claim 1.

### BACKGROUND

Such a chop saw is known from WO2006/033381. Chop saws and miter saws are commonly found on jobsites because of their versatility and ability to make cuts that other power tools cannot make quickly. Typically a chop saw has a base assembly and a saw assembly attached to the base that can be lowered into a cutting position. One such chop saw illustrated in US Patent Nos. 6,272,960 and 8,607,678.

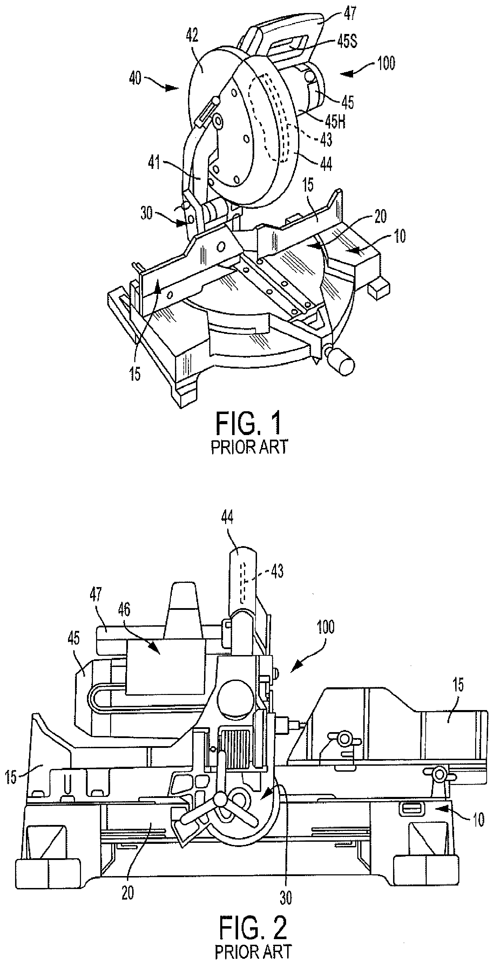

Referring to FIGS. 1-2, a chop saw 100 typically has a base assembly 10, a support housing 30 connected to the base assembly 10, and a saw assembly 40 pivotally connected to the support housing 30. If the chop saw 100 is a miter saw, base assembly 10 would comprise a rotatable table assembly 20 rotatably attached to the base assembly 10, and support housing 30 would be connected the table assembly 20. The saw assembly 40 may include an arm 41 pivotally connected to support housing 30, an upper blade guard 42 connected to arm 41, a motor 45 supported by arm 41 and/or upper blade guard 42, a blade 43 driven by the motor 45, and a lower blade guard 44 pivotally attached to the upper blade guard.

A fence assembly 15 is typically attached to base assembly 10. With such construction, a user can place a work piece against fence assembly 15 and table assembly 20 for cutting. The user can make a miter cut by rotating table assembly 20 relative to base assembly 10.

If support housing 30 is pivotally attached to table assembly 20, the user can rotate support housing 30 relative to table assembly 20 and/or base assembly 10, tilting the blade 43 relative to the table assembly 20, thus changing the blade's bevel angle. A cut made with the blade 43 tilted at an angle (and perpendicular to the fence assembly 15) is known as a "bevel cut." A cut made with the blade 43 set to both an angle relative to the fence assembly 15 (miter angle) and an angle relative to the base assembly 10 (bevel angle) is known as a "compound cut."

It is well known that the motor 45 may be powered by a rechargeable power tool battery pack 46. An exemplary arrangement is shown in US Patent No. 6,763,751. Battery pack 46 is preferably mounted on motor housing 45H and/or handle 47, which may be attached to upper blade guard 42 and/or arm 41.

An on/off switch 45S provided on handle 47 allows the user to control when electric power is provided to motor 45. Such switch 45S allows the user to turn on and off motor 45 (causing blade 43 to rotate) by pressing and releasing switch 45S, respectively.

US2015/-174674 discloses a chop saw which rotatingly drives the cutting blade at different rates dependent on the position of the saw assembly above the base.

It is desirable to control motor 45 to maximize the number of cuts that can be performed by chop saw 100 without requiring disconnecting battery pack 46 from chop saw 100 for recharging.

For this purpose, according to the invention, a chop saw defined by the features of claim 1 is provided.

Further preferred embodiments are defined by the features of the dependent claims 2-8.

### BRIEF DESCRIPTION OF THE DRAWINGS

Fig. 1 is a front left perspective view of a miter saw.
Fig. 2 is a rear view of the miter saw of Fig. 1.
Fig. 3 is a block diagram of the motor control system according to the invention.
Fig. 4 is a side view of a first embodiment of a position sensor.
Fig. 5 is a side view of a second embodiment of a position sensor.
Fig. 6 is a side view of a third embodiment of a position sensor.
Fig. 7 is a side view of a fourth embodiment of a position sensor.
Fig. 8 is a side view of a fifth embodiment of a position sensor.
FIG. 9 is a chart showing different maximum blade speeds at different positions of the saw assembly.

### DESCRIPTION

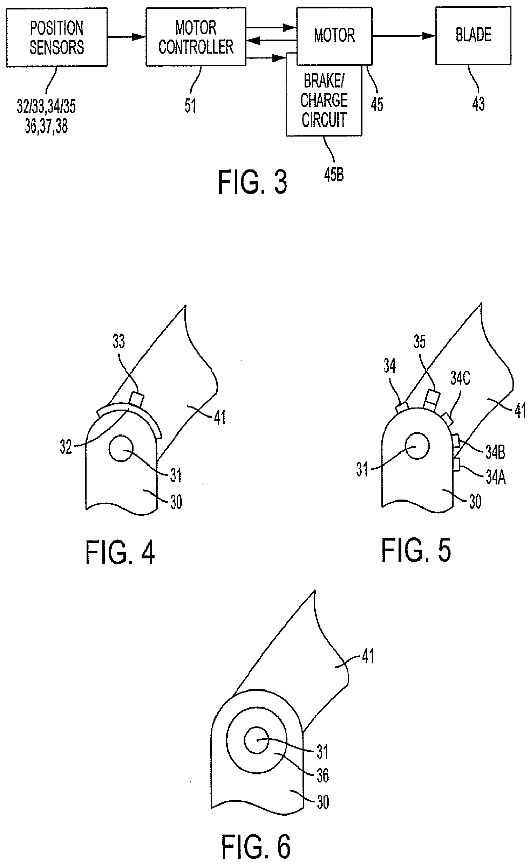

FIG. 3 illustrates the motor control system provided for chop saw 100 according to the invention. Motor controller 51 receives inputs from at least one position sensor 32/33, 34/35, 36, 37 and/or 38. Such position sensor(s) effectively senses the position of the blade 43 relative to the table assembly 20 and/or base assembly 10. Motor controller 51 controls the speed of motor 45 (and thus of blade 43) at least partly dependent upon the output of position sensor(s) 32/33, 34/35, 36, 37 and/or 38. Motor controller 51 may also receive a feedback signal representative of the speed of motor 45 to further control the motor speed.

FIG. 4 illustrates a first embodiment of the position sensor 32/33. In such embodiment, a resistive element 32 is disposed on the support housing 30. The arm 41 has a wiper 33 contacting the resistive element 32. Persons skilled in the art will recognize that such arrangement effectively creates a potentiometer, which can provide a signal representative of the angular position of arm 41 relative to support housing 30, thus providing an indication of the location of blade 43 relative to table assembly 20 and/or base assembly 10. Persons skilled in the art will recognize that resistive element 32 and wiper 33 may be provided alternatively on arm 41 and support housing 30, respectively.

FIG. 5 illustrates a second embodiment of the position sensor 34/35. In such embodiment, a plurality of switches 34 has been provided on support housing 30. Arm 41 has a protrusion 35 that contacts each individual switch 34, closing such switch 34, as arm 41 is rotated relative to support housing 30.

Persons skilled in the art will recognize that motor controller 51 can determine the angular position of arm 41 relative to support housing 30, thus providing an indication of the location of blade 43 relative to table assembly 20 and/or base assembly 10, according to which switch 34 has been closed. Persons skilled in the art will also recognize that switches 34 and protrusion 35 may be provided alternatively on arm 41 and support housing 30, respectively.

Preferably switches 34 are placed at the different positions that are desirable to detect. Persons skilled in the art will recognize the number of switches 34 may be determined by the number of positions that are desirable to detect, and that, if a larger number of switches 34 is utilized, the rotational position of arm 41 can be detected with more granularity and thus more certainty thereof.

FIG. 6 illustrates a third embodiment of the position sensor 36. In such embodiment, a rotary encoder 36 is provided on support housing 30. As arm 41 is rotated relative to support housing 30, axle 31 may rotate therealong. Rotary encoder 36 would detect such rotation and provide a signal representative of the rotational motion of axle 31 (and thus of arm 41). Preferably rotary encoder 36 is an absolute rotary encoder.

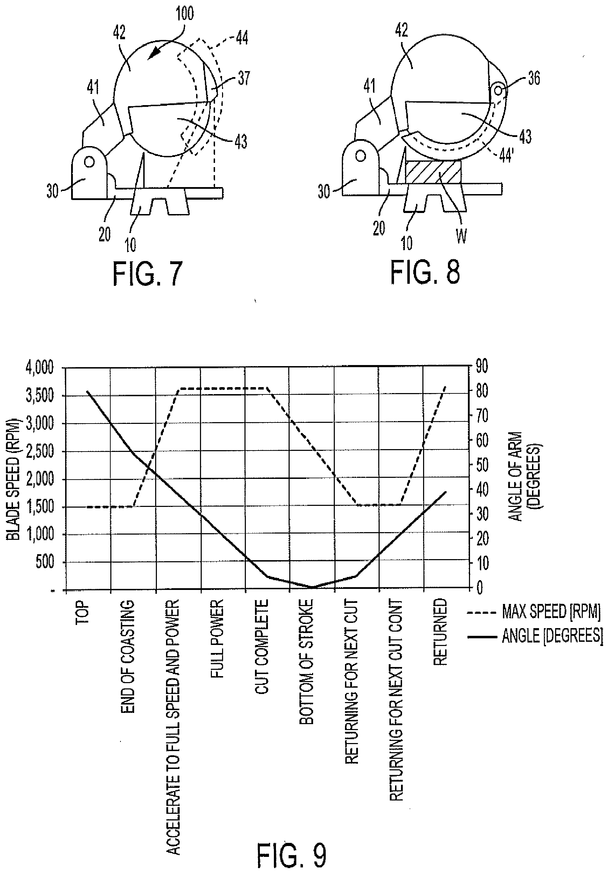

FIG. 7 illustrates a fourth embodiment of the position sensor 37. In such embodiment, a range finder or distance measurer 37 disposed on upper blade guard 42 can be used to determine the distance between blade 43, upper blade guard 42, base assembly 10 and/or table assembly 20. Persons skilled in the art will recognize that distance measurer 37 may be a laser distance measurer, an acoustic distance measure, an infrared distance measurer and/or a machine vision system. Persons skilled in the art will recognize that distance measurer 37 may be disposed alternatively on arm 41, support housing 30, base assembly 10 and/or table assembly 20.

FIG. 8 illustrates a fifth embodiment of the position sensor 38. In such embodiment, a lower blade guard 44' is pivotally attached to upper blade guard 42. Lower blade guard 44' preferably has an opening between two side walls.

With such arrangement, as blade 43 is moved towards base assembly 10 and/or table assembly 20 during a cutting operation, lower blade guard 44' would contact a workpiece W placed on base assembly 10 and/or table assembly 20. Lower blade guard 44' would be pushed towards upper blade guard 42, exposing blade 43 and allowing contact between blade 43 and workpiece W. As the blade 43 is moved further towards base assembly 10 and/or table assembly 20, blade 43 would continue to cut workpiece W. Workpiece W would continue contacting lower blade guard 44', moving lower blade guard 44' further upwardly relative to upper blade guard 42.

A rotational sensor 38 connected to lower blade guard 44' can determine the rotational position of lower blade guard 44' relative to upper blade guard 42, and provide a signal according to such rotational position to motor controller 51. Such signal would represent the position of the blade 43 with respect to workpiece W and/or lower blade guard 44'.

As shown in FIG. 9, motor controller 51 can set a maximum motor speed according to the position of arm 41 (and thus of blade 43) relative to the table assembly 20 and/or base assembly 10. For example, for a 12 inch miter saw, when the arm 41 is in the maximum angle relative to the table assembly 20 and/or base assembly 10, motor controller 51 may limit the motor speed to around 1500 rpm. As the user brings saw assembly 40 (and thus arm 41 and blade 43) downwardly towards the workpiece W, the table assembly 20 and/or base assembly 10, motor controller 51 increases the maximum motor speed, such as around 3600 rpm. This maximum motor speed may be achieved when the angle relative to the table assembly 20 and/or base assembly 10 is between around 55 degrees and around 0 degrees, and preferably between around 55 degrees and around 5 degrees.

Persons skilled in the art will recognize that a workpiece W placed on the table assembly 20 and/or base assembly 10 would be cut during this downward movement. During such cutting operation, the blade speed (and thus the motor speed) will drop from the pre-cutting motor speed, possibly down to about 1500 rpm.

As the user moves saw assembly 40 (and thus arm 41 and blade 43) upwardly away from the workpiece W, the table assembly 20 and/or base assembly 10, it is preferable to not increase the speed of motor 45 (and of blade 43) to the maximum motor speed or pre-cutting motor speed, as with a prior art miter saw, as such energy would be wasted if the user turns off motor 45 when saw assembly 40 (and thus arm 41 and blade 43) arrives at the top position of the saw assembly 40, i.e., when at the maximum angle relative to the table assembly 20 and/or base assembly 10. In order to minimize such wasted energy (and thus maximize battery run time), motor controller 51 can be programmed to delay the acceleration of motor 45 (and of blade 43) so that it only begins after saw assembly 40 has passed a predetermined angular threshold, such as about 40 degrees, in the upward direction while the user is still activating/pressing switch 45S.

Preferably, motor controller 51 will delay the acceleration of motor 45 (and of blade 43) until two events have occurred: (1) saw assembly 40 has passed a predetermined angular threshold, such as about 40 degrees or the top position of saw assembly 40, in the upward direction while the user is still activating/pressing switch 45S, and then (2) the user moves saw assembly 40 (and thus arm 41 and blade 43) downwardly towards the workpiece W, the table assembly 20 and/or base assembly 10, past a second threshold, such as when the arm angle relative to the table assembly 20 and/or base assembly 10 is between around 55 degrees. After both of these events have occurred, motor controller 51 would then increase motor speed (and thus blade speed).

Persons skilled in the art will recognize that motor controller 51 can recognize the movement direction of saw assembly 40 by comparing the signal received from the position sensors 32/33, 34/35, 36, 37, 38 with the previous received signal. Motor controller 51 would use that directional information to determine the maximum motor speed for the present position of saw assembly 40, as discussed above. For example, if position sensor 32/33 is set up so that the signal has a lower voltage (due to increased resistance) as the saw assembly 40 is moved towards table assembly 20 and/or base assembly 10, motor controller 51 will recognize that saw assembly 40 is moving upwardly if the previous signal is lower than the most recent signal. Conversely motor controller 51 will recognize that saw assembly 40 is moving downwardly if the previous signal is higher than the most recent signal.

Similarly, if position sensor 34/35 is set up so that switch 34A will be closed at the lowest position, with switches 34B, 34C being at greater angles, motor controller 51 will recognize that saw assembly 40 is moving upwardly if the previous signal identifies switch 34A as pressed and the most recent signal identifies switch 34B as pressed, for example. Conversely motor controller 51 will recognize that saw assembly 40 is moving downwardly if the previous signal identifies switch 34B as pressed and the most recent signal identifies switch 34A as pressed, for example.

Persons skilled in the art will recognize that some encoders provide directional information. It is preferable to use such encoders as position sensor 36, so that motor controller 51 can receive and use the directional information.

In the embodiment of FIG. 7, position sensor 37 will provide a signal representative of the distance. Motor controller 51 will recognize that saw assembly 40 is moving upwardly if the previous signal represents a shorter distance than the most recent signal. Conversely motor controller 51 will recognize that saw assembly 40 is moving downwardly if the previous signal represents a longer distance than the most recent signal.

In the embodiment of FIG. 8, position sensor 38 will provide a signal representative of the rotational position of the lower blade guard 44' relative to the blade 43 (and to workpiece W). If position 38 is set up so that a larger amplitude in the signal represents a larger rotational position of lower blade guard 44', i.e., a shorter distance between the lower blade guard 44' and upper blade guard 42, then motor controller 51 will recognize that saw assembly 40 is moving upwardly if the previous signal has a larger amplitude than the most recent signal. Conversely motor controller 51 will recognize that saw assembly 40 is moving downwardly if the previous signal has a smaller amplitude than the most recent signal.

Persons skilled in the art will recognize that it is also beneficial for motor controller 51 to engage a regenerative charging circuit 45B at the lowest position and/or as the user is moving saw assembly 40 upwardly. In particular, according to the invention it is especially advantageous to engage the regenerative charging circuit 45B in order to charge battery pack 46 as the blade 43 coasts down to extend the number of cuts chop saw 100 can make before having to remove battery pack 46 for charging.

## Claims

1. A chop saw comprising:
a base assembly (10);
a support housing (30) connected to the base assembly (10);
a saw assembly (40) pivotally connected to the support housing (30) allowing the saw assembly (40) to be pivoted downwardly towards the base assembly (10) for conducting a cutting operation on a workpiece, the saw assembly (40) comprising a motor (45) powered by a rechargeable power tool battery pack (46), a blade (43) driven by the motor (45) and an upper blade guard (42) for covering an upper portion of the blade (43);
a sensor assembly (32, 33; 34, 35; 36; 37; 38) disposed on at least one of the support housing (30) and the saw assembly (40) for sensing a position of the saw assembly (40) relative to at least one of the workpiece and the support housing (30); and
a controller (51) connected to the sensor assembly (32, 33; 34, 35; 36; 37; 38) and the motor (45), the controller (51) receiving an input representative of the position of the saw assembly (40) and controlling the motor (45) according to such input;
wherein the controller (51) controls speed of the motor (45) according to such input;
**characterized in that** the controller (51) decreases the motor speed when the saw assembly (40) is pivoted upwardly;
wherein there is further provided a regenerative charging circuit (45B);
wherein the controller (51) engages the regenerative charging circuit (45B) in order to charge the rechargeable power tool battery pack (46) as the blade (43) coasts down.

2. The chop saw of Claim 1, wherein the sensor assembly (32, 33; 34, 35; 36; 37; 38) comprises a resistive element (32) disposed on the one of the support housing (30) and the saw assembly (40), and a wiper (33) contacting the resistive element (32), the wiper (33) being disposed on the other of the support housing (30) and the saw assembly (40).

3. The chop saw of Claim 1, wherein the sensor assembly (32, 33; 34, 35; 36; 37; 38) comprises a plurality of switches (34) disposed on the one of the support housing (30) and the saw assembly (40), and a protrusion (35) contacting at least one of the switches (34), the protrusion (35) being disposed on the other of the support housing (30) and the saw assembly (40).

4. The chop saw of Claim 1, wherein the sensor assembly (32, 33; 34, 35; 36; 37; 38) comprises a rotary encoder (36) disposed on the one of the support housing (30) and the saw assembly (40), the rotary encoder (36) comprising an axle (31) connected to the other of the support housing (30) and the saw assembly (40).

5. The chop saw of Claim 1, wherein the sensor assembly (32, 33; 34, 35; 36; 37; 38) comprises a distance measurer (37) disposed on the upper blade guard (42).

6. The chop saw of Claim 1, wherein the saw assembly further comprises a lower blade guard (44') pivotally attached to the upper blade guard (42), and the sensor assembly (32, 33; 34, 35; 36; 37; 38) senses a pivotal position of the lower blade guard (44') relative to the upper blade guard (42).

7. The chop saw of Claim 1, wherein the controller (51) increases the motor speed when the saw assembly (40) is pivoted downwardly.

8. The chop saw of Claim 7, wherein the controller (51) increases the motor speed when the saw assembly (40) is pivoted downwardly past a first angular threshold.

## Patentansprüche

1. Kappsäge, umfassend:
eine Basisbaugruppe (10);
ein Stützgehäuse (30), das mit der Basisbaugruppe (10) verbunden ist;
eine Sägebaugruppe (40), die schwenkbar mit dem Stützgehäuse (30) verbunden ist, was der Sägebaugruppe (40) erlaubt, nach unten zu der Basisbaugruppe (10) geschwenkt zu werden, um einen Schneidebetrieb an einem Werkstück durchzuführen, wobei die Sägebaugruppe (40) einen Motor (45), der von einem wiederaufladbaren Elektrowerkzeugbatteriepack (46) mit Leistung versorgt wird, ein Blatt (43), das von dem Motor (45) angetrieben wird, und einen oberen Blattschutz (42) zum Abdecken eines oberen Abschnitts des Blatts (43) umfasst;
eine Sensorbaugruppe (32, 33; 34, 35; 36; 37; 38), die an mindestens einem des Stützgehäuses (30) und der Sägebaugruppe (40) angeordnet ist, um eine Position der Sägebaugruppe (40) relativ zu mindestens einem des Werkstücks und des Stützgehäuses (30) zu erkennen; und
einen Kontroller (51), der mit der Sensorbaugruppe (32, 33; 34, 35; 36; 37; 38) und dem Motor (45) verbunden ist, wobei der Kontroller (51) einen Eingang empfängt, der die Position der Sägebaugruppe (40) darstellt und den Motor (45) gemäß solchem Eingang steuert;
wobei der Kontroller (51) Geschwindigkeit des Motors (45) gemäß solchem Eingang steuert;
**dadurch gekennzeichnet, dass** der Kontroller (51) die Motorgeschwindigkeit verringert, wenn die Sägebaugruppe (40) nach oben geschwenkt wird;
wobei weiter ein rückgewinnender Ladekreis (45B) bereitgestellt ist;
wobei der Kontroller (51) mit dem rückgewinnenden Ladekreis (45B) eingreift, um das wiederaufladbare Elektrowerkzeugbatteriepack (46) zu laden, wenn das Blatt (43) nach unten gleitet.

2. Kappsäge nach Anspruch 1, wobei die Sensorbaugruppe (32, 33; 34, 35; 36; 37; 38) ein Widerstandselement (32), das an dem einen des Stützgehäuses (30) und der Sägebaugruppe (40) angeordnet ist, und einen Wischer (33), der das Widerstandselement (32) kontaktiert, umfasst, wobei der Wischer (33) an dem anderen des Stützgehäuses (30) und der Sägebaugruppe (40) angeordnet ist.

3. Kappsäge nach Anspruch 1, wobei die Sensorbaugruppe (32, 33; 34, 35; 36; 37; 38) eine Vielzahl von Schaltern (34), die an dem einen des Stützgehäuses (30) und der Sägebaugruppe (40) angeordnet ist, und einen Fortsatz (35), der mindestens einen der Schalter (34) kontaktiert, umfasst, wobei der Fortsatz (35) an dem anderen des Stützgehäuses (30) und der Sägebaugruppe (40) angeordnet ist.

4. Kappsäge nach Anspruch 1, wobei die Sensorbaugruppe (32, 33; 34, 35; 36; 37; 38) einen Drehgeber (36), der an dem einen des Stützgehäuses (30) und der Sägebaugruppe (40) angeordnet ist, umfasst, wobei der Drehgeber (36) eine Achse (31) umfasst, die mit dem anderen des Stützgehäuses (30) und der Sägebaugruppe (40) verbunden ist.

5. Kappsäge nach Anspruch 1, wobei die Sensorbaugruppe (32, 33; 34, 35; 36; 37; 38) einen Abstandsmesser (37) an dem oberen Blattschutz (42) angeordnet umfasst.

6. Kappsäge nach Anspruch 1, wobei die Sägebaugruppe weiter einen unteren Blattschutz (44'), der schwenkbar an dem oberen Blattschutz (42) befestigt ist, umfasst und die Sensorbaugruppe (32, 33; 34, 35; 36; 37; 38) eine Schwenkposition des unteren Blattschutzes (44') relativ zu dem oberen Blattschutz (42) erkennt.

7. Kappsäge nach Anspruch 1, wobei der Kontroller (51) die Motorgeschwindigkeit erhöht, wenn die Sägebaugruppe (40) nach unten geschwenkt wird.

8. Kappsäge nach Anspruch 7, wobei der Kontroller (51) die Motorgeschwindigkeit erhöht, wenn die Sägebaugruppe (40) über eine erste Winkelschwelle hinaus nach unten geschwenkt wird.

## Revendications

1. Scie circulaire comprenant :
un ensemble de base (10),
un boîtier de support (30) raccordé à l'ensemble de base (10) ;
un ensemble scie (40) raccordé de façon pivotante au boîtier de support (30) permettant à l'ensemble scie (40) de pivoter vers le bas vers l'ensemble de base (10) pour mener une opération de découpe sur une pièce, l'ensemble scie (40) comprenant un moteur (45) alimenté par un bloc-batterie d'outil électrique rechargeable (46), une lame (43) entraînée par le moteur (45) et un garde-lame supérieur (42) pour recouvrir une partie supérieure de la lame (43) ;
un ensemble de capteurs (32, 33 ; 34, 35 ; 36 ; 37 ; 38) disposé sur au moins l'un du boîtier de support (30) et de l'ensemble scie (40) pour détecter une position de l'ensemble scie (40) par rapport à au moins l'un de la pièce et du boîtier de support (30) ; et
un dispositif de commande (51) raccordé à l'ensemble de capteurs (32, 33 ; 34, 35 ; 36 ; 37 ; 38) et au moteur (45), le dispositif de commande (51) recevant une saisie représentative de la position de l'ensemble scie (40) et commandant le moteur (45) selon une telle saisie ;
dans laquelle le dispositif de commande (51) commande une vitesse du moteur (45) selon une telle saisie ;
**caractérisée en ce que** le dispositif de commande (51) diminue la vitesse de moteur lorsque l'ensemble scie (40) pivote vers le haut ;
dans laquelle il est en outre fourni un circuit de charge régénérative (45B) ;
dans laquelle le dispositif de commande (51) se met en prise avec le circuit de charge régénérative (45B) afin de charger le bloc-batterie d'outil électrique rechargeable (46) à mesure que la lame (43) descend en roue libre.

2. Scie circulaire selon la revendication 1, dans laquelle l'ensemble de capteurs (32, 33 ; 34, 35 ; 36 ; 37 ; 38) comprend un élément résistif (32) disposé sur l'un du boîtier de support (30) et de l'ensemble scie (40), et un balai (33) entrant en contact avec l'élément résistif (32), le balai (33) étant disposé sur l'autre du boîtier de support (30) et de l'ensemble scie (40).

3. Scie circulaire selon la revendication 1, dans laquelle l'ensemble de capteurs (32, 33 ; 34, 35 ; 36 ; 37 ; 38) comprend une pluralité de commutateurs (34) disposés sur l'un du boîtier de support (30) et de l'ensemble scie (40), et une saillie (35) entrant en contact avec au moins l'un des commutateurs (34), la saillie (35) étant disposée sur l'autre du boîtier de support (30) et de l'ensemble scie (40).

4. Scie circulaire selon la revendication 1, dans laquelle l'ensemble de capteurs (32, 33 ; 34, 35 ; 36 ; 37 ; 38) comprend un codeur rotatif (36) disposé sur l'un du boîtier de support (30) et de l'ensemble scie (40), le codeur rotatif (36) comprenant un axe (31) raccordé à l'autre du boîtier de support (30) et de l'ensemble scie (40).

5. Scie circulaire selon la revendication 1, dans laquelle l'ensemble de capteurs (32, 33 ; 34, 35 ; 36 ; 37 ; 38) comprend un mesureur de distance (37) disposé sur le garde-lame supérieur (42).

6. Scie circulaire selon la revendication 1, dans laquelle l'ensemble scie comprend en outre un garde-lame inférieur (44') fixé de manière pivotante au garde-lame supérieur (42), et l'ensemble de capteurs (32, 33 ; 34, 35 ; 36 ; 37 ; 38) capte une position de pivotement du garde-lame inférieur (44') par rapport au garde-lame supérieur (42).

7. Scie circulaire selon la revendication 1, dans laquelle le dispositif de commande (51) augmente la vitesse de moteur lorsque l'ensemble scie (40) pivote vers le bas.

8. Scie circulaire selon la revendication 7, dans laquelle le dispositif de commande (51) augmente la vitesse de moteur lorsque l'ensemble scie (40) pivote vers le bas au-delà d'un premier seuil angulaire.
